# EUROPEAN PATENT APPLICATION

(11) **EP 4 564 546 A1**
(43) Date of publication of application: **04.06.2025**
(21) Application number: 24177441.3
(22) Date of filing: 22.05.2024
(51) Int. Cl.: H01M 50/147, H01M 50/548, H01M 50/552

(54) **BATTERY CELL AND BATTERY CELL MANUFACTURING METHOD**

(30) Priority: 30.11.2023 KR 20230171234
(71) Applicant: Samsung SDI Co., Ltd., Yongin-si, Gyeonggi-do 17084 (KR)
(72) Inventor: BAE, Kwang Soo, 16678 Suwon-si (KR); YONG, Jun Sun, 16678 Suwon-si (KR); LEE, Jun Hyung, 16678 Suwon-si (KR); KIM, Ji Hwan, 16678 Suwon-si (KR); ROH, Heyoung Cheoul, 16678 Suwon-si (KR); BAE, Chae Eun, 16678 Suwon-si (KR); LEE, Jung Woo, 16678 Suwon-si (KR)
(74) Representative: Marks & Clerk LLP

(57) **Abstract**

Disclosed herein is a battery cell and a battery cell manufacturing method, and is intended to provide a battery cell and a battery cell manufacturing method capable of preventing assembly errors due to a collision with a boss terminal during a process of assembling a cap cover to a case. To this end, the present disclosure provides one or more electrode assemblies each including a positive electrode and a negative electrode, a case into which the electrode assemblies are built, a cap cover configured to cover an open region of the case, an electrode tab connected to the electrode assemblies, and a boss terminal guided by the cap cover, passing through the cap cover, and coupled to the electrode tab.

## Description

### BACKGROUND

### 1. Field of the Invention

Aspects of embodiments of the present disclosure relates to a battery cell and a battery cell manufacturing method.

### 2. Discussion of Related Art

In general, as the demand for portable electronic products such as laptops, video cameras, and portable phones rapidly increases and robots, electric vehicles, and the like are commercialized in earnest, research on high-performance secondary batteries capable of repeated charging and discharging is actively underway.

Secondary batteries are widely used for driving or storing energy in small devices such as portable electronic devices, as well as medium to large-sized devices such as electric vehicles and energy storage systems (ESS). In particular, in the case of medium to large-sized devices, one battery module is constituted by a plurality of battery cells electrically connected to each other to improve output and/or capacity of a battery.

In battery cells in the related art, a collision may occur due to misalignment between parts during an assembly process of a case and a cap cover. The above-described information disclosed in the technology that forms the background of the present disclosure is only intended to improve understanding of the background of the present disclosure, and thus may include information that does not constitute the related art.

### SUMMARY OF THE INVENTION

An aspect of embodiments of the present disclosure is directed to providing a battery cell and a battery cell manufacturing method capable of preventing or substantially preventing collisions between parts during an assembly process of a case and a cap cover. According to another aspect of embodiments of the present disclosure, a battery cell and a battery cell manufacturing method capable of preventing or substantially preventing assembly errors due to a collision with a boss terminal during a process of assembling a cap cover to a case are provided.

These and other aspects and features of the present disclosure will be described in or will be apparent from the following description of some embodiments of the present disclosure.

According to an aspect of the present invention, there is provided a battery cell including one or more electrode assemblies each including a positive electrode and a negative electrode, a case into which the one or more electrode assemblies are built, a cap cover configured to cover an open region or opening of the case, an electrode tab connected to the one or more electrode assemblies, and a boss terminal configured to be guided by the cap cover, passing through the cap cover, and coupled to the electrode tab.

The cap cover may include a cap plate coupled to the case and configured to cover the opening of the case and a guide hole formed in the cap plate and configured to guide the boss terminal so that the boss terminal passes through the cap plate.

The guide hole may include a first guide hole formed in a lower portion of the cap plate and configured to guide the boss terminal; and a second guide hole formed in an upper portion of the cap plate, connected to the first guide hole, and configured to guide the boss terminal.

An assembly position of the boss terminal may be aligned by being guided by the first guide hole.

A mounting position of the boss terminal may be guided by being guided by the second guide hole.

An inner diameter of the second guide hole may decrease toward an upper side thereof.

The boss terminal may include a terminal plate connected to the electrode tab and a terminal protrusion formed on the terminal plate and configured to be guided by the cap cover to protrude outward.

The terminal protrusion may have a trapezoidal cross-section.

The terminal protrusion may have a cylindrical shape and a diameter thereof may decrease toward an upper end.

A lower end of the terminal protrusion may have a diameter larger than a diameter of an upper end thereof, and an inclination angle of the terminal protrusion may be 1 degree to 10 degrees.

The diameter of the upper end of the terminal protrusion may be 8 mm or more.

An upper end of the terminal protrusion may have a rounded shape.

The battery cell according to the aspect of the present invention may further include a sealing portion disposed between the cap cover and the boss terminal to maintain airtightness.

The sealing portion may include a first sealing that welds a gap between the cap cover and the boss terminal.

The sealing portion may further include a second sealing that covers the first sealing and additionally covers the gap between the cap cover and the boss terminal.

The battery cell according to the aspect of the present invention may further include a coating layer applied to at least one of the cap cover and the boss terminal to suppress fiction.

According to another aspect of the present invention, there is provided a battery cell manufacturing method including an inserting operation of inserting an electrode assembly into a case, a tab coupling operation of connecting the electrode assembly and an electrode tab, a terminal coupling operation of connecting the electrode tab and a boss terminal, and a covering operation of guiding, by a cap cover, the boss terminal through the cap cover while the cap cover covers the case.

The covering operation may include a cover contacting operation of contacting, by a transfer member, the cap cover with the boss terminal and a cover correcting operation of correcting the boss terminal by further moving the cap cover by the transfer member.

The cover correcting operation may include a first correcting operation of aligning an assembly position by guiding the boss terminal by a first guide hole formed in the cap cover and a second correcting operation of guiding a mounting position of the boss terminal by guiding the boss terminal by a second guide hole formed in the cap cover and connected to the first guide hole.

The battery cell manufacturing method according to the aspect may further include a sealing operation of removing a gap formed between the cap cover and the boss terminal.

However, the effects obtainable through the present disclosure are not limited to the above effects, and other technical effects that are not mentioned will be clearly understood by those skilled in the art from the following description of the present disclosure.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a view schematically illustrating a vertical battery cell according to one embodiment of the present invention;
FIG. 2 is a view schematically illustrating a horizontal battery cell according to one embodiment of the present invention;
FIG. 3 is a view schematically illustrating a cap cover according to one embodiment of the present invention;
FIG. 4 is a view schematically illustrating a guide hole according to one embodiment of the present invention;
FIG. 5 is a cross-sectional view schematically illustrating a boss terminal according to one embodiment of the present invention;
FIG. 6 is a perspective view schematically illustrating the boss terminal according to one embodiment of the present invention;
FIG. 7 is a view schematically illustrating a sealing portion according to one embodiment of the present invention;
FIG. 8 is a view schematically illustrating a coating layer according to one embodiment of the present invention;
FIG. 9 is a flowchart schematically showing a battery cell manufacturing method according to one embodiment of the present invention;
FIG. 10 is a flowchart schematically showing a covering operation in FIG. 9;
FIG. 11 is a view schematically illustrating a cover correcting operation in FIG. 10; and
FIG. 12 is a view schematically illustrating a sealing operation according to one embodiment of the present invention.

### DETAILED DESCRIPTION OF EXAMPLE EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as having a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

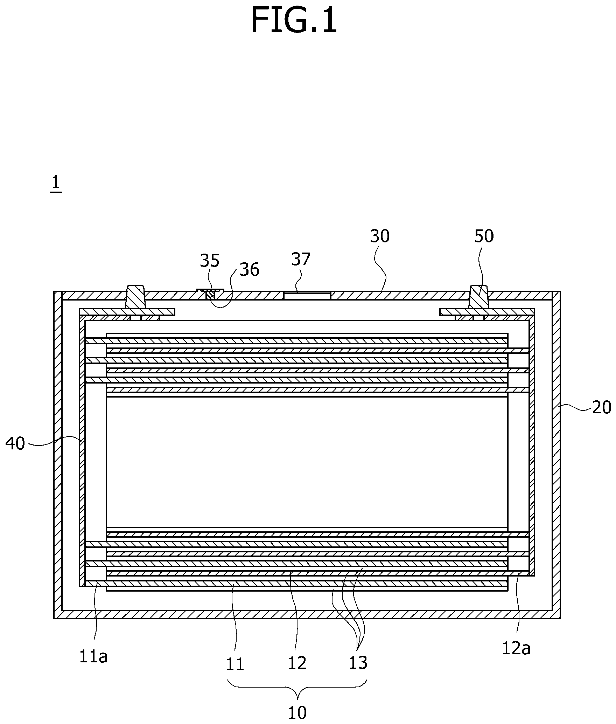

FIG. 1 is a view schematically illustrating a vertical battery cell according to one embodiment of the present invention. Referring to FIG. 1, a battery cell 1 according to one embodiment of the present invention may include an electrode assembly 10, a case 20, a cap cover 30, an electrode tab 40, and a boss terminal 50.

One or more electrode assemblies 10 may be wound with a separator 13, which is an insulator, interposed between a positive electrode 11 and a negative electrode 12. The positive electrode 11 and the negative electrode 12 may include a coated portion, which is a region where a current collector formed of a thin metal foil is coated with an active material, and uncoated portions 11a and 12a, which are regions that are not coated with the active material. The positive electrode 11 and the negative electrode 12 may be wound after interposing the separator 13, which is an insulator, therebetween. However, the present invention is not limited thereto, and the electrode assembly 10 may have a structure in which positive electrodes and negative electrodes composed of a plurality of sheets are alternately stacked with the separator 13 interposed therebetween.

The electrode assembly 10 may be built into, i.e. housed in, the case 20. The case 20 may form an overall exterior of the battery cell 1, and may be made of a conductive metal such as aluminum, an aluminum alloy, or nickel-plated steel. In addition, the case 20 may have an open upper side and provide a space in which the electrode assembly 10 is accommodated.

The cap cover 30 may cover an open region or opening of the case 20. The cap cover 30 may be coupled to an upper side of the case 20 and may cover the opening of the case 20. The cap cover 30 in contact with the case 20 may be made of a conductive material.

The electrode tab 40 may be connected to the electrode assembly 10. The electrode tab 40 may be welded to uncoated portions 11a and 12a that are regions, which are not coated with an active material. The electrode tab 40 may be inserted into the case 20 and supported by a separate insulating part so as not to contact an inner wall of the case 20.

The boss terminal 50 may be guided by the cap cover 30 to pass through the cap cover 30 and coupled to the electrode tab 40. An upper portion of the boss terminal 50 may be exposed to the outside by passing through the cap cover 30. A lower portion of the boss terminal 50 may be welded to the electrode tab 40.

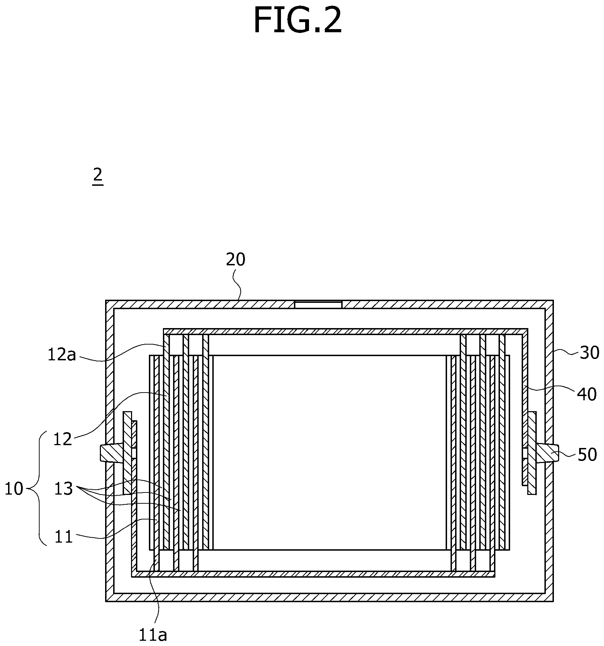

FIG. 2 is a view schematically illustrating a horizontal battery cell according to one embodiment of the present invention. Referring to FIG. 2, like the vertical battery cell 1, a horizontal battery cell 2 may include an electrode assembly 10, a case 20, a cap cover 30, an electrode tab 40, and a boss terminal 50. That is, since shapes of some of the components of the horizontal battery cell 2 are different from those of the vertical battery cell 1, descriptions of the same components will be omitted.

The horizontal battery cell 2 may have a shape in which right and left lengths of the case 20 are longer than top and bottom lengths, and both right and left ends of the case 20 are open. Electrode assemblies 10 may be disposed inside the case 20, and electrode tabs 40 connected to respective electrode assemblies 10 may extend to both right and left ends of the case 20. The electrode tabs 40 may be coupled to the respective boss terminals 50, and a pair of cap covers 30 that move laterally may cover both right and left ends of the case 20. At this time, the boss terminals 50 may be guided as the cap covers 30 move.

Meanwhile, there is a tolerance for securing an insertion space for the electrode assemblies 10 inside the case 20, and due to the tolerance, the boss terminals 50 are likely to deviate from their correct positions during an assembly process. When the boss terminal 50 deviates from its correct position, a collision may occur between the boss terminal 50 and the cap cover 30, which is assembled by moving in a straight line. However, since the cap cover 30 guides the boss terminal 50, the boss terminal 50 may be aligned during the assembly process of the cap cover 30.

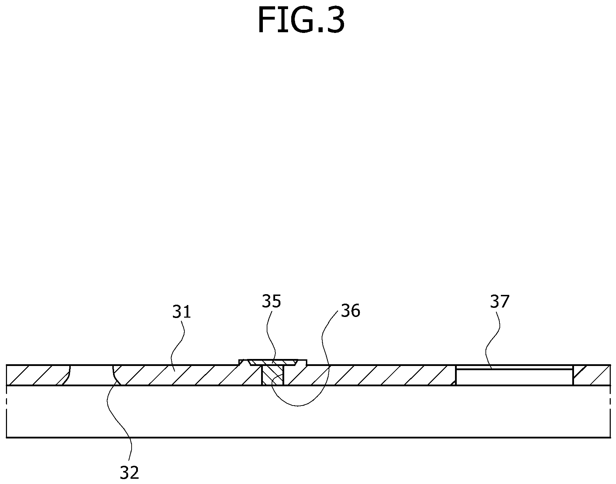

FIG. 3 is a view schematically illustrating the cap cover according to one embodiment of the present invention. Referring to FIG. 3, the cap cover 30 according to one embodiment of the present invention may include a cap plate 31 and a guide hole 32.

The cap plate 31 may be coupled to the case 20 and may cover an opening of the case 20. The cap plate 31 may be made of a thin plate and coupled to the opening of the case 20. An electrolyte injection port 36 into which a sealing stopper 35 may be installed may be formed on the cap plate 31, and a vent 37 having a notch formed thereon may be installed.

The guide hole 32 may be formed in the cap plate 31 and may guide the boss terminal 50 so that the boss terminal 50 passes through the cap plate 31. As the cap plate 31 is moved to be coupled to the case 20, the guide hole 32 may correct a position of the boss terminal 50.

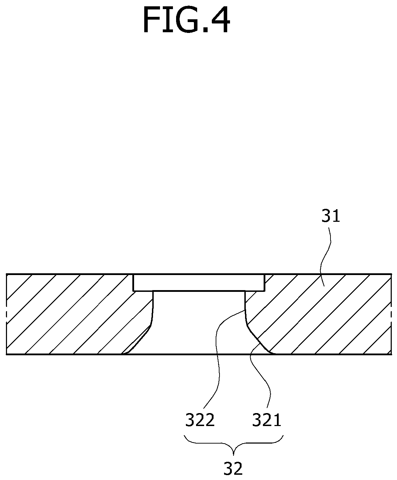

FIG. 4 is a view schematically illustrating the guide hole according to one embodiment of the present invention. Referring to FIG. 4, the guide hole 32 according to one embodiment of the present invention may include a first guide hole 321 and a second guide hole 322.

The first guide hole 321 may be formed in a lower portion of the cap plate 31 and may guide the boss terminal 50. The first guide hole 321 may have a hole shape extending from a bottom surface of the cap plate 31 to a setting point. The first guide hole 321 may have a shape in which an inner peripheral surface decreases upward, i.e. the diameter or circumference decreases. An inner wall of the first guide hole 321 may form an inclined surface or a curved surface. A diameter of the first guide hole 321 may be larger than a distance that the boss terminal 50 coupled to the electrode tab 40 is movable within the case 20. In this way, even when the boss terminal 50 is biased in one direction due to the tolerance of the case 20, the boss terminal 50 may be guided by the first guide hole 321.

An assembly position of the boss terminal 50 guided by the first guide hole 321 may be aligned. The position of the boss terminal 50 biased in one direction may be aligned through the first guide hole 321. In this way, the electrode tab 40 connected to the boss terminal 50 may be maintained in a state of being spaced apart from the case 20.

The second guide hole 322 may be formed in an upper portion of the cap plate 31 and connected to the first guide hole 321, and may guide the boss terminal 50. An inner diameter of the second guide hole 322 may be smaller than an inner diameter of the first guide hole 321. The inner diameter of the second guide hole 322 may decrease toward an upper side thereof. In addition, the second guide hole 322 may have upper and lower inner diameters whose sizes are the same.

A mounting position of the boss terminal 50 guided by the second guide hole 322 may be guided. An outer peripheral surface of the boss terminal 50 may be caught in the second guide hole 322 so that its movement is restricted. The second guide hole 322 may guide the terminal mounting position of the boss terminal 50 to a desired point or position depending on the size or height of the inner peripheral surface.

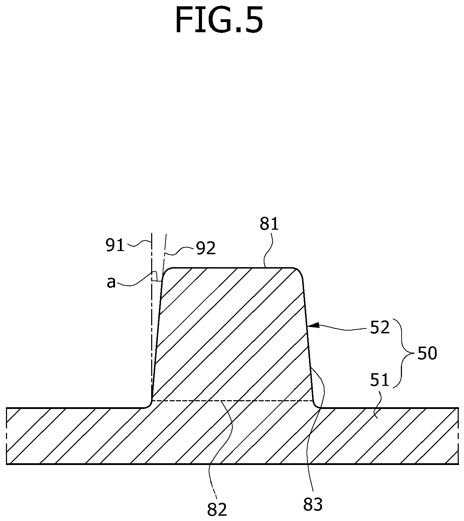

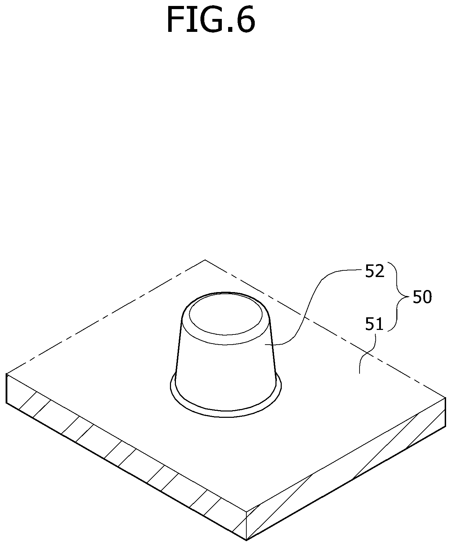

FIG. 5 is a cross-sectional view schematically illustrating the boss terminal according to one embodiment of the present invention, and FIG. 6 is a perspective view schematically illustrating the boss terminal according to one embodiment of the present invention. Referring to FIGS. 5 and 6, the boss terminal 50 according to one embodiment of the present invention may include a terminal plate 51 and a terminal protrusion 52. The terminal plate 51 and the terminal protrusion 52 may include a conductive material, and may be formed as one piece or manufactured individually and then coupled.

The terminal plate 51 may be coupled to the electrode tab 40. A bottom surface of the terminal plate 51 may be welded to the electrode tab 40. The terminal plate 51 may be covered with a separate insulating material. The terminal plate 51 may be a rectangular plate.

The terminal protrusion 52 may be formed on the terminal plate 51, and may be guided by the cap cover 30 to protrude outward. The terminal protrusion 52 may have a trapezoidal cross-section. The terminal protrusion 52 may have a cylindrical shape and have a shape in which a diameter thereof decreases toward an upper end. An outer peripheral surface of the terminal protrusion 52 may be caught in the second guide hole 322 so that a mounting position of an end thereof is determined.

The terminal protrusion 52 may have a lower end whose diameter is larger than a diameter of an upper end, and an inclination angle "a" of the terminal protrusion 52 may be 1 degree to 10 degrees. In this case, the inclination angle "a" of the terminal protrusion 52 may mean an angle between a first imaginary line 91 formed vertically at an edge of the lower end of the terminal protrusion 52 and a second imaginary line 92 formed along an outer peripheral surface of the terminal protrusion 52.

Meanwhile, a diameter of an upper surface 81 of the terminal protrusion 52 is formed to be smaller than a diameter of a lower surface 82 of the terminal protrusion 52. It is advantageous to design the upper surface 81 and the lower surface 82 to be large in size in terms of welding and reducing cell resistance. However, direct welding may be possible by designing the diameter of the upper surface 81 to be 8 mm or more.

The upper end of the terminal protrusion 52 may have a rounded shape. The terminal protrusion 52 may include an upper surface 81, a lower surface 82, and an inclined surface 83 connecting the upper surface 81 and the lower surface 82, and a point where the inclined surface 83 and the upper surface 81 meet may have a rounded shape so that the impact of contact with the guide hole 32 is alleviated.

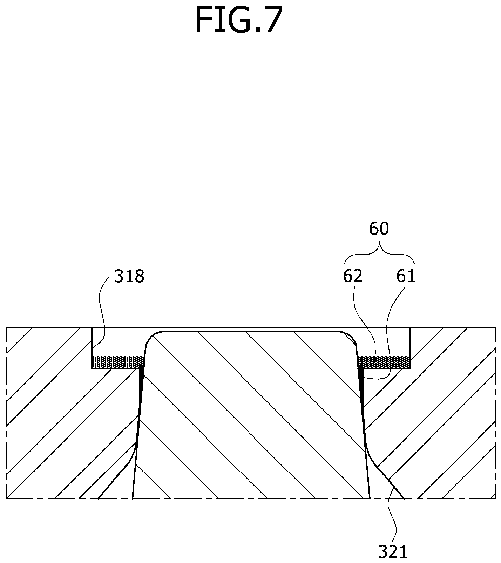

FIG. 7 is a view schematically illustrating a sealing portion according to one embodiment of the present invention. Referring to FIG. 7, the battery cell 1 or 2 according to one embodiment of the present invention may further include a sealing portion 60 disposed between the cap cover 30 and the boss terminal 50 to maintain airtightness.

The sealing portion 60 according to one embodiment of the present invention includes a first sealing 61 and, as needed, may further include a second sealing 62.

The first sealing 61 may weld a gap between the cap cover 30 and the boss terminal 50. The first sealing 61 may be hardened after a welding base material is melted and introduced into the gap between the cap cover 30 and the boss terminal 50. The first sealing 61 may be melted by inserting a ring-shaped base material into the boss terminal 50 and heating the base material. In addition, for the first sealing 61, a conductive ring may be inserted into the gap between the cap cover 30 and the boss terminal 50, and the first sealing 61, the cap cover 30, and the boss terminal 50 may be coupled by welding.

The second sealing 62 may cover the first sealing 61 and additionally cover the gap between the cap cover 30 and the boss terminal 50. Since the cap cover 30 and the boss terminal 50 are electrically connected by the first sealing 61, the second sealing 62 may be made of a non-conductive waterproof material such as silicone. The second sealing 62 may be formed on the cap plate 31 and filled in a plate groove 318 disposed above the second guide hole 322. A terminal may be inserted into the plate groove 318 and connected to the boss terminal 50.

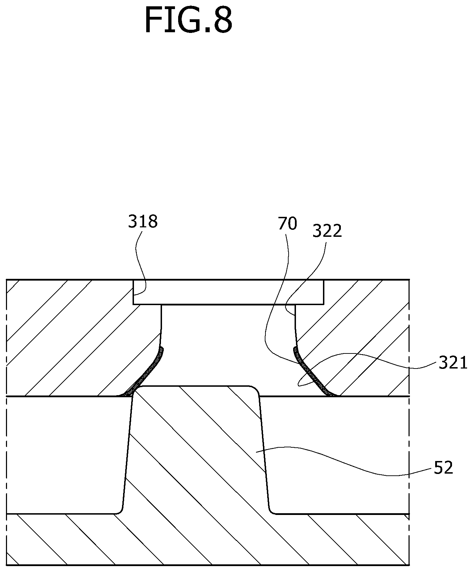

FIG. 8 is a view schematically illustrating a coating layer according to one embodiment of the present invention. Referring to FIG. 8, the battery cell 1 or 2 according to one embodiment of the present invention may further include a coating layer 70.

The coating layer 70 according to one embodiment of the present invention may be applied to at least one of the cap cover 30 and the boss terminal 50 to suppress friction. The coating layer 70 may be made of a lubricant that reduces contact friction. Coating of the coating layer 70 may be limited to the first guide hole 321 to maintain conductivity between the cap cover 30 and the boss terminal 50.

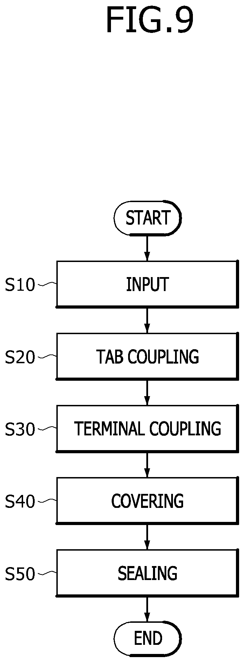

FIG. 9 is a flowchart schematically showing a battery cell manufacturing method according to one embodiment of the present invention. The battery cell manufacturing method according to one embodiment of the present invention will be described with reference to FIG. 9 as follows.

In an input or inserting operation (S10), the electrode assembly 10 is input or inserted into the case 20. When the case 20 has a shape in which its upper side is open, the electrode assembly 10 may be inserted into the case 20 by moving the electrode assembly 10 from the top to the bottom of the case 20. When the case 20 has a shape in which both its right and left sides are open, the electrode assembly 10 may be inserted into the case 20 by moving the electrode assembly 10 in a lateral direction of the case 20.

In a tab coupling operation (S20), the electrode assembly 10 and the electrode tab 40 are connected. The electrode tab 40 is inserted into the case 20 and welded to the uncoated portions 11a and 12a, which are regions that are not coated with an active material.

In a terminal coupling operation (S30), the electrode tab 40 and the boss terminal 50 are connected. When the case 20 has the shape in which the upper side is open, a pair of boss terminals 50 may be disposed on the upper portion of the case 20 and a positive electrode tab 40 and a negative electrode tab 40 may be welded to the respective boss terminals 50. When the case 20 has the shape in which both right and left sides are open, a pair of boss terminals 50 may be disposed on both sides of the case 20 and a positive electrode tab 40 and a negative electrode tab 40 may be welded to the respective boss terminals 50.

In a covering operation (S40), the boss terminal 50 is guided by the cap cover 30 and passes through the cap cover 30 while the cap cover 30 covers the case 20. The guide hole 32 may be formed in the cap cover 30, and as the cap cover 30 moves, the boss terminal 50 may pass through the guide hole 32. The assembly position of the boss terminal 50 may be corrected by the guide hole 32.

When the case 20 has the shape in which the upper side is open, the cap cover 30 may descend from the upper side of the case 20 to cover the upper side of the case 20. In this case, the boss terminal 50 may be guided through the guide hole 32 formed in the cap cover 30, so that position correction may be possible.

When the case 20 has the shape in which both right and left sides are open, the cap cover 30 may be moved to cover both sides of the case 20 in both right and left directions. In this case, the boss terminal 50 may be guided through the guide hole 32 formed in the cap cover 30, so that position correction may be possible.

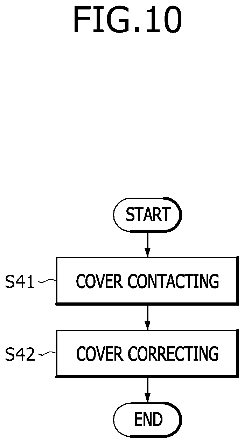

FIG. 10 is a flowchart schematically showing the covering operation in FIG. 9. The covering operation according to one embodiment of the present invention will be described with reference to FIG. 10 as follows.

In a cover contacting operation (S41), a transfer member brings the cap cover 30 into contact with the boss terminal 50. The transfer member may hold the cap plate 31 and move the cap plate 31 to cover an opening of the case 20. The first guide hole 321 is formed in the cap plate 31 transferred by the transfer member, and the first guide hole 321 first contacts the boss terminal 50.

In a cover correcting operation (S42), the transfer member further moves the cap cover 30 to correct the boss terminal 50. When the transfer member further moves the cap plate 31 after the boss terminal 50 first contacts the first guide hole 321, the assembly position may be corrected as the boss terminal 50 moves along an inner peripheral surface of the first guide hole 321 and an inner peripheral surface of the second guide hole 322 that communicates with the first guide hole 321.

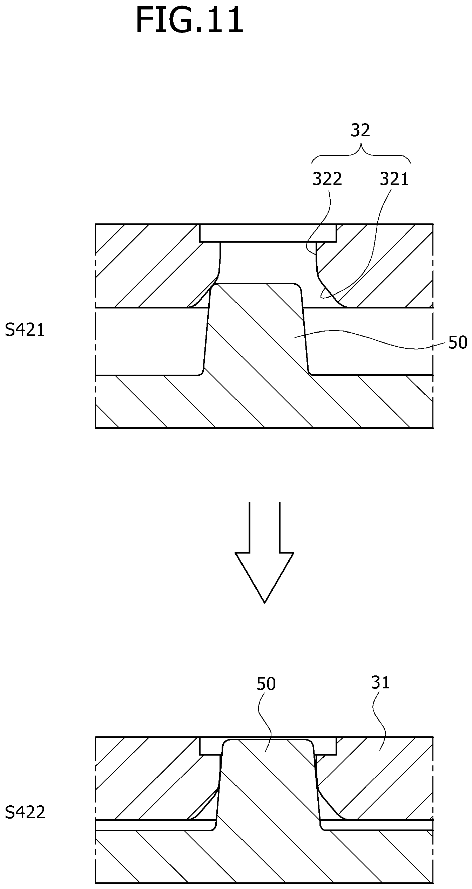

FIG. 11 is a view schematically illustrating the cover correcting operation in FIG. 10. A process of correcting the boss terminal 50 will be described with reference to FIG. 11 as follows.

In a first correcting operation (S421), the boss terminal 50 is guided by the first guide hole 321 formed in the cap cover 30 and an assembly position is aligned. The boss terminal 50 in contact with the first guide hole 321 may be moved toward the second guide hole 322 along an inclined surface of the first guide hole 321.

In a second correcting operation (S422), the boss terminal 50 is guided by the second guide hole 322 and a mounting position is guided. The second guide hole 322 formed in the cap plate 31 may be connected to the first guide hole 321, and the boss terminal 50, which has a trapezoidal cross-section, may pass through the second guide hole 322, starting from its end. When the outer peripheral surface of the boss terminal 50 is caught in the second guide hole 322 and its movement is restricted, the mounting position of the boss terminal 50 may be set. At this time, the cap plate 31 may be in a state of reaching a coupling position with the case 20.

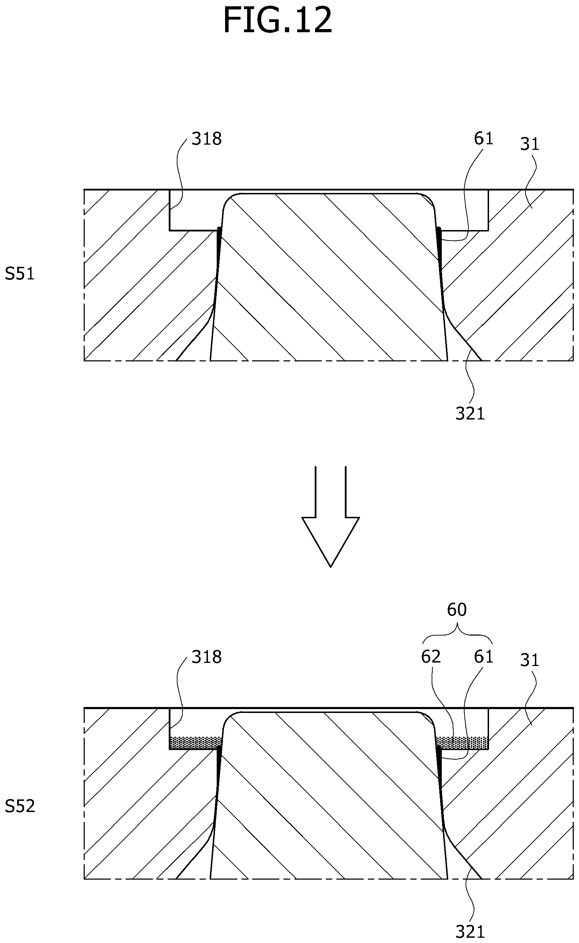

FIG. 12 is a view schematically illustrating a sealing operation according to one embodiment of the present invention. The battery cell manufacturing method according to one embodiment of the present invention will be described with reference to FIG. 12 as follows.

A sealing operation (S50) may be performed after the position of the boss terminal 50 is corrected by the cap cover 30. In the sealing operation (S50), the gap between the cap cover 30 and the boss terminal 50 may be eliminated.

In a first sealing operation (S51), the gap between the cap cover 30 and the boss terminal 50 may be welded. That is, the first sealing 61 may be formed by being hardened after a welding base material is melted and introduced into the gap between the cap cover 30 and the boss terminal 50.

A second sealing operation (S52) may be optionally performed after the first sealing operation (S51). In the second sealing operation (S52), the gap between the cap cover 30 and the boss terminal 50 may be additionally covered. The second sealing 62 filled in the plate groove 318 may cover the first sealing 61.

Since the cap cover 30 and the boss terminal 50 are electrically connected in the first sealing operation (S51), in the second sealing operation (S52), a non-conductive waterproof material such as silicone may be used.

A battery cell and a battery cell manufacturing method according to an embodiment of the present invention can prevent or substantially prevent a collision with a boss terminal during a process of assembling a cap cover to a case.

The battery cell and the battery cell manufacturing method according to an embodiment of the present invention can correct a position of the boss terminal along a guide hole formed in the cap cover, thereby preventing or substantially preventing assembly errors in the boss terminal even when a tolerance space is formed in the case.

The battery cell and the battery cell manufacturing method according to an embodiment of the present invention can maintain airtightness by removing a gap between the cap cover and the boss terminal by a sealing portion.

According to still another aspect of the present invention, a battery pack and a battery module manufactured using a battery with an improved structure and a vehicle including the same can be provided.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

## Claims

1. A battery cell comprising:
one or more electrode assemblies each comprising a positive electrode and a negative electrode;
a case into which the one or more electrode assemblies are built;
a cap cover configured to cover an opening of the case;
an electrode tab connected to the one or more electrode assemblies; and
a boss terminal configured to be guided by the cap cover, passing through the cap cover and coupled to the electrode tab.

2. The battery cell as claimed in claim 1, wherein the cap cover comprises:
a cap plate coupled to the case and configured to cover the opening of the case; and
a guide hole formed in the cap plate and configured to guide the boss terminal so that the boss terminal passes through the cap plate.

3. The battery cell as claimed in claim 2, wherein the guide hole comprises:
a first guide hole formed in a lower portion of the cap plate and configured to guide the boss terminal; and
a second guide hole formed in an upper portion of the cap plate, connected to the first guide hole, and configured to guide the boss terminal.

4. The battery cell as claimed in claim 3, wherein an assembly position of the boss terminal is aligned by being guided by the first guide hole.

5. The battery cell as claimed in claim 3 or claim 4, wherein a mounting position of the boss terminal is guided by being guided by the second guide hole.

6. The battery cell as claimed in any one of claims 3 to 5, wherein an inner diameter of the second guide hole decreases toward an upper side thereof.

7. The battery cell as claimed in any one of the preceding claims, wherein the boss terminal comprises:
a terminal plate connected to the electrode tab; and
a terminal protrusion formed on the terminal plate and configured to be guided by the cap cover to protrude outward.

8. The battery cell as claimed in claim 7, wherein the terminal protrusion has a trapezoidal cross-section.

9. The battery cell as claimed in claim 7, wherein the terminal protrusion has a cylindrical shape and a diameter thereof decreases toward an upper end.

10. The battery cell as claimed in claim 7, wherein a lower end of the terminal protrusion has a diameter larger than a diameter of an upper end thereof, and
an inclination angle of the terminal protrusion is 1 degree to 10 degrees.

11. The battery cell as claimed in claim 10, wherein the diameter of the upper end of the terminal protrusion is 8 mm or more.

12. A battery cell manufacturing method comprising:
an inserting operation of inserting an electrode assembly into a case;
a tab coupling operation of connecting the electrode assembly and an electrode tab;
a terminal coupling operation of connecting the electrode tab and a boss terminal; and
a covering operation of guiding, by a cap cover, the boss terminal through the cap cover while the cap cover covers the case.

13. The battery cell manufacturing method as claimed in claim 12, wherein the covering operation comprises:
a cover contacting operation of contacting, by a transfer member, the cap cover with the boss terminal; and
a cover correcting operation of correcting the boss terminal by further moving the cap cover by the transfer member.

14. The battery cell manufacturing method as claimed in claim 13, wherein the cover correcting operation comprises:
a first correcting operation of aligning an assembly position by guiding the boss terminal by a first guide hole formed in the cap cover; and
a second correcting operation of guiding a mounting position of the boss terminal by guiding the boss terminal by a second guide hole formed in the cap cover and connected to the first guide hole.

15. The battery cell manufacturing method as claimed in any one of claims 12 to 14, further comprising a sealing operation of removing a gap formed between the cap cover and the boss terminal.
